# EUROPÄISCHE PATENTANMELDUNG

(11) **EP 1 839 934 A2**
(43) Veröffentlichungstag der Anmeldung: **03.10.2007**
(21) Anmeldenummer: 07102698.3
(22) Anmeldetag: 20.02.2007
(51) Int. Cl.: B60N 2/22, B60N 2/30

(54) **Sitz für einen Fahrzeugführer einer Baumaschine, sowie Baumaschine**

(30) Priorität: 31.03.2006 DE 102006015504
(71) Anmelder: WIRTGEN GmbH, 53578 Windhagen (DE)
(72) Erfinder: Böhme, Heiko, 53560, Vettelschoß (DE); Kurscheid, Urban, 53639, Königswinter (DE); Berning, Christian, 53909, Zülpich (DE)
(74) Vertreter: Dallmeyer, Georg

(57) **Zusammenfassung**

Bei einem Sitz (1) für einen Fahrzeugführer einer Baumaschine, insbesondere für eine Straßenfräse mit einer ersten Sitzfläche (2) für den Fahrzeugführer in einer Sitzposition und einer Rückenlehne (4), ist vorgesehen, dass die Rückenlehne (4) nach vorne in Richtung auf den Fahrzeugführer in mindestens eine Lehnenstellung schwenkbar ist, in der eine zweite Sitzfläche (8) für den Fahrzeugführer in einer im wesentlichen stehenden Position gebildet ist, die am oberen Ende der Rückenlehne (4) angeordnet ist.

## Beschreibung

Die Erfindung betrifft einen Sitz für einen Fahrzeugführer einer Baumaschine, insbesondere einer Straßenfräse, mit den Merkmalen des Oberbegriffs des Anspruchs 1, sowie eine Baumaschine mit den Merkmalen des Oberbegriffs des Anspruchs 15.

Eine derartige selbstfahrende Straßenfräse ist beispielsweise aus der EP 1194651 B bekannt.

Insbesondere bei Straßenfräsen tritt das Problem auf, dass der Fahrzeugführer häufig seine Position verändern muss, wobei er etwa 50 % der Arbeitszeit im Stehen und 50 % im Sitzen verbringt. Bei Straßenfräsen ist der Sitz für den Fahrzeugführer auf der Null-Seite angeordnet, das ist diejenige Seite der Maschine, an der eine Stirnkante der Fräswalze in etwa bündig oder mit geringem Abstand zu der Seite der Maschine abschließt, um möglichst nah an ein Hindernis, wie eine Bordsteinkante oder eine Leitplanke entlangfräsen zu können.

Insbesondere die Tätigkeit im Stehen ist für den Fahrzeugführer sehr ermüdend. Ein weiteres Problem besteht darin, dass der Fahrzeugführer auch während des Fahrens im Stehen seine Hände an den Bedienelementen hat. Beim Befahren von unebenem Gelände oder Hindernissen führt dies zu ungewollten Fahrtrichtungs-und Geschwindigkeitsänderungen.

Der Erfindung liegt daher die Aufgabe zugrunde, einen Sitz für einen Fahrzeugführer einer Baumaschine, sowie eine Baumaschine mit einem derartigen Sitz zu schaffen, die eine ergonomische Sitz- und Stehposition ermöglichen.

Zur Lösung dieser Aufgabe dienen die Merkmale der Ansprüche 1 und 15.

Die Erfindung sieht in vorteilhafter Weise vor, dass die Rückenlehne nach vorne in Richtung auf den Fahrzeugführer in mindestens eine Lehnenstellung schwenkbar ist, in der eine zweite am oberen Ende der Rückenlehne angeordnete Sitzfläche für den Fahrzeugführer in einer im wesentlichen stehenden Position gebildet ist.

Mit Hilfe eines derartigen Sitzes ist nicht nur eine ergonomische Sitzposition gewährleistet, sondern auch eine ergonomische Stehposition, in der sich der Fahrzeugführer gegen die zweite Sitzfläche anlehnen kann, wenn er stehend das Fahrzeug bedienen muss. Dies ist beispielsweise dann erforderlich, wenn der Fahrzeugführer mit der Baumaschine längs einer Kante fahren muss und dabei ein Peilen über die Vorderkante des Fräswalzengehäuses auf der Nullseite erforderlich ist.

Ist es nicht erforderlich, die Maschine im Stehen zu beobachten, kann sich der Fahrzeugführer hinsetzen und sein Fahrzeug aus der Sitzposition bedienen, nachdem die Lehne wieder aufgerichtet worden ist. Im Sitzen ist ein Peilen über einen Peilstab am vorderen Ende der Maschine möglich.

Die Rücklehne kann ein Kopfteil aufweisen, das am oberen freien Ende der Rückenlehne angeordnet ist, wobei das Kopfteil der Rückenlehne die zweite Sitzfläche für den Fahrzeugführer in einer im wesentlichen stehenden Position aufweist. Die zweite Sitzfläche für den Fahrzeugführer ist in besonders vorteilhafter Weise in dem Kopfteil ausgebildet.

Die Rückenlehne kann nach vorne in Richtung auf die erste Sitzfläche in mindestens einer Lehnenstellung arretierbar sein. Auf diese Weise kann die Rückenlehne in eine der Stehpositionen des Fahrzeugführers angepasste Position gebracht werden und dort arretiert werden. Auch ist eine Anpassung an unterschiedlich große Fahrzeugführer möglich.

Die zweite Sitzfläche kann aus einer ebenen Fläche oder aus einer konkav ausgeformten Sitzfläche bestehen.

Das Kopfteil kann nach vorne um eine horizontale Achse schwenkbar gelagert sein. Dies ermöglicht eine Anpassung der zweiten Sitzfläche an die Stehposition des Fahrzeugführers. Die zweite Sitzfläche ist auf der normalerweise dem Kopf des Fahrzeugführers abgewandten Seite des Kopfteils z.B. auch auf der Oberseite angeordnet.

Die erste Sitzfläche kann höhenverstellbar sein, wodurch auch die Höhe der Rückenlehne veränderbar und an einen individuellen Fahrzeugführer anpassbar ist. Ein vorteilhaftes Ausführungsbeispiel sieht vor, dass das Kopfteil (12) höhenverstellbar und als Kopfstütze verwendbar ist.

Für die Sitzposition des Fahrzeugführers kann eine Fußbank an dem Sitz angeordnet sein, derart, dass für die Sitzposition des Fahrzeugführers eine Fußbank (14) an dem Sitz (1) angeordnet ist, derart dass die erste Sitzfläche (2) auf einer Höhe angeordnet werden kann, bei der sich der Oberkörper eines Fahrzeugführers im Sitzen und im Stehen in einer in wesentlichen gleichen Höhenposition befindet, und dass die Fußbank (14) für die Standposition des Fahrzeugführers entfernbar ist.

Aufgrund der Fußbank kann erreicht werden, dass die Bedienelemente zum Führen und Steuern der Baumaschine, sowie das Lenkrad sich sowohl in der Sitzposition, als auch in der Stehposition des Fahrzeugführers im Wesentlichen auf der gleichen Höhe zum Oberkörper des Fahrzeugführers befinden, so dass keine Höhenverstellung der Bedienelemente notwendig ist.

Für die Stehposition des Fahrzeugführers wird die Fußbank vorzugsweise nach oben weggeschwenkt, wodurch der Fahrzeugführer in eine tiefere Position gelangt, so dass der Oberkörper sich im Sitzen oder im Stehen in einer im wesentlichen gleichen Höhe befindet.

Die Rückenlehne kann in der nach vorne verschwenkten Position unter einem Winkel von 20 bis 50°, vorzugsweise 30 bis 40° zur Horizontalen arretierbar sein.

Die Rückenlehne kann beim Verschwenken nach vorne mit der Fußbank derart gekoppelt sein, dass die Fußbank in der nach vorne verschwenkten Position der Rückenlehne in der weggeschwenkten oder in einer sonstigen inaktiven Position ist.

Der Sitz kann insgesamt in der Höhe verstellbar sein, um sich an die Körpergröße eines Fahrzeugführers anpassen zu lassen,

Der Sitz kann sowohl insgesamt quer als auch in- oder entgegen der Fahrtrichtung verschiebbar sein oder nach vorne kippbar sein.

Die Erfindung betrifft auch eine Baumaschine, insbesondere eine Straßenfräse mit dem beschriebenen Sitz.

Im Folgenden werden unter Bezugnahme auf die Zeichnungen ein Ausführungsbeispiel der Erfindung näher erläutert. Es zeigen:
- Fig. 1: einen Fahrzeugsitz mit einem Fahrzeugführer in einer sitzenden Position und
- Fig. 2: einen Sitz mit verschwenkter Rücklehne, die dem Fahrzeugführer eine zweite Sitzfläche bietet.

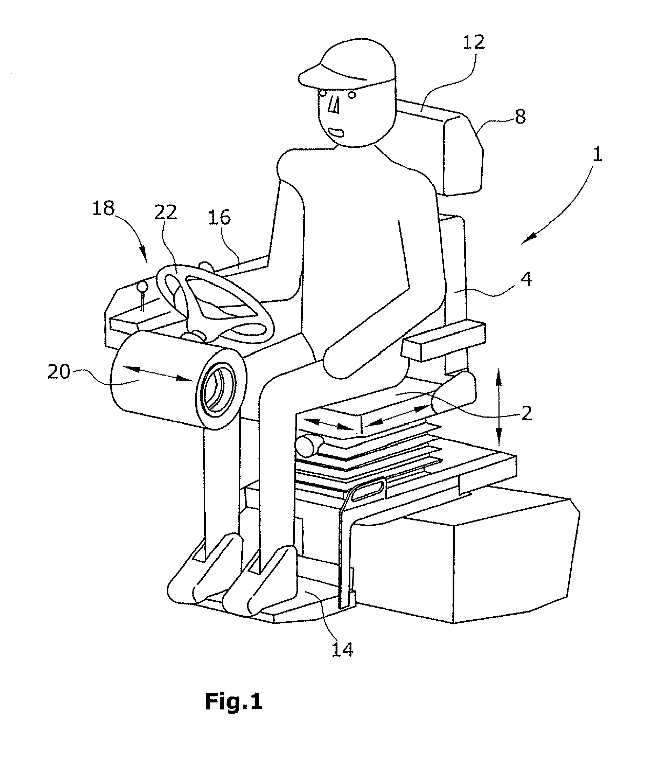

Fig. 1 zeigt einen Sitz 1 für einen Fahrzeugführer einer Baumaschine, insbesondere für eine Baumaschine, die entlang einer vorgegebenen Linie gelenkt und gesteuert werden muss, bei der der Fahrzeugführer insbesondere eine Seitenwand der Baumaschine im Stehen beobachten muss.

Aus der in Fig. 1 gezeigten Sitzposition ist das allgemeine Lenken der Baumaschine möglich. Soll dagegen die Baumaschine entlang einer Linie verfahren werden, ist eine Stehposition günstiger, wenn die Leitlinie sich auf einer Seite der Maschine befindet und überwacht werden muss, ob die Baumaschine sich entlang dieser Linie bewegt. Bei Straßenfräsmaschinen ist es bekannt, dass die Fräswalze mit einer Stirnseite nahezu bündig mit einer Seitenfläche der Baumaschine (Null-Seite) abschließt, so dass, wenn ein Fräsen entlang einer Kante z.B. einer Bordsteinkante oder einer Leitplanke erfolgen soll, der Fahrzeugführer im Stehen beobachten muss, ob die Baumaschine nahe genug an das Hindernis herangeführt worden ist.

Der in Fig. 1 dargestellte Sitz 1 weist eine erste Sitzfläche 2 für den Fahrzeugführer in einer Sitzposition auf, sowie eine Rückenlehne 4, an deren oberem Ende sich ein Kopfteil 8 befinden kann. Der Sitz 1 kann insgesamt höhenverstellbar sein, kann auch quer zur Fahrtrichtung, also seitlich oder in oder entgegen der Fahrtrichtung vor- und zurück bewegt werden. Damit der Fahrzeugführer eine bequeme ergonomische Position in Relation zu den Bedienelementen 18 und 22 einnehmen kann, ist der Sitz 1 höhenverstellbar, wobei eine klappbare Fußbank 14 eine Unterstützung für die Beine des Fahrzeugführers bietet.

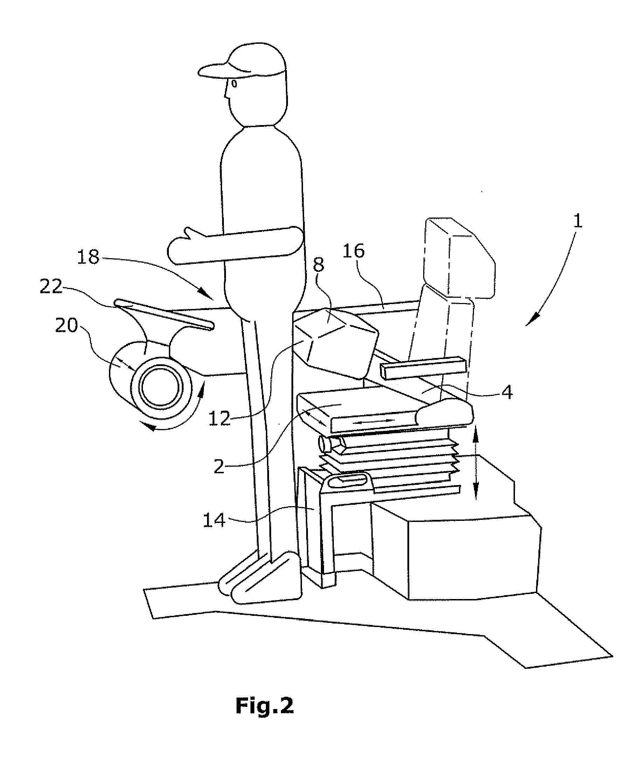

Das Lenkrad 22 ist in einer um eine horizontale Schwenkachse schwenkbaren Konsole 20 angeordnet und kann für die Stehposition in die in Fig. 2 ersichtliche flachere Position verschwenkt werden. Des Weiteren ist es auch möglich, das Lenkrad 22 quer zur Fahrtrichtung, also in Relation zur Schwenkachse der Konsole 20 axial zu verstellen.

Hinter den Bedienelementen 18 für den Fahrzeugführer befindet sich eine Armlehne 16 zum Aufstützen des rechten Arms.

Die vorzugsweise um eine horizontale Achse des Sitzes in Richtung auf die erste Sitzfläche 2 verschwenkbare Rückenlehne 4 des Sitzes 1 kann zweiteilig ausgeführt sein und ein höhenverstellbares Kopfteil 12 aufweisen.

Wie am besten aus Fig. 2 ersichtlich, kann die Rückenlehne 4 in eine nach vorne verschwenkte Position gebracht werden, wobei das Kopfteil 12 eine zweite Sitzfläche 8 bietet, auf der sich der Fahrzeugführer in der stehenden Position abstützen kann, so dass er im Stehen nicht so schnell ermüden kann.

In diesem Fall kann die klappbare Fußbank 14 nach oben verschwenkt sein, so dass der Fahrzeugführer auf der Plattform der Straßenbaumaschine stehen kann. Mit Hilfe der klappbaren Fußbank kann der Unterschied der Höhenposition des Oberkörpers des Fahrzeugführers zwischen der Sitzposition und der Stehposition reduziert werden, so dass die Bedienelemente 18 sowohl in der Sitz- als auch in der Stehposition gut erreichbar sind.

Die Fußbank 14 kann auch mit der Rückenlehne 4 derart gekoppelt sein, dass beim Verschwenken der Rückenlehne 4 in die vordere Position die Fußbank 14 gleichzeitig nach oben verschwenkt wird.

Es versteht sich, dass die zweite Sitzfläche auch in einer verlängerten Rückenlehne 4 ohne Kopfteil 12 am oberen Ende der Rückenlehne auf der dem Fahrzeugführer normalerweise abgewandten Seite ausgeformt sein kann.

Die zweite Sitzfläche ist in den Zeichnungen eben dargestellt, kann allerdings auch ergonomisch an die Körperkontur des Fahrzeugführers angepasst sein, z.B. konkav ausgeformt sein.

Es besteht auch die Möglichkeit, dass die Rückenlehne 4 in unterschiedlichen Positionen arretierbar ist, um sich an die Körpergröße unterschiedlicher Fahrzeugführer anzupassen.

Der Schwenkwinkel zur Horizontalen, in der die Rückenlehne 4 arretierbar ist, liegt im Bereich zwischen 20 und 50°, vorzugsweise 30 bis 45°, wobei sich ein Schwenkwinkel der Rückenlehne von ca. 35° als besonders vorteilhaft ergeben hat.

## Patentansprüche

1. Sitz (1) für einen Fahrzeugführer einer Baumaschine, insbesondere für eine Straßenfräse, mit
- einer ersten Sitzfläche (2) für den Fahrzeugführer in einer Sitzposition und
- einer Rückenlehne (4),
**dadurch gekennzeichnet,**
**dass** die Rückenlehne (4) nach vorne in Richtung auf den Fahrzeugführer in mindestens eine Lehnenstellung schwenkbar ist, in der eine zweite Sitzfläche (8) für den Fahrzeugführer in einer im wesentlichen stehenden Position gebildet ist, die am oberen Ende der Rückenlehne (4) angeordnet ist.

2. Vorrichtung nach Anspruch 1, **dadurch gekennzeichnet, dass** die Rückenlehne (4) ein Kopfteil (12) aufweist, das am oberen freien Ende der Rückenlehne (4) angeordnet ist, und dass das Kopfteil (12) der Rückenlehne (4) die zweite Sitzfläche (8) für eine im wesentlichen stehende Position des Fahrzeugführers aufweist.

3. Vorrichtung nach Anspruch 1 oder 2, **dadurch gekennzeichnet, dass** die Rückenlehne (4) nach vorne in Richtung auf die erste Sitzfläche (2) in mindestens einer Lehnenstellung arretierbar ist.

4. Vorrichtung nach einem der Ansprüche 1 bis 3, **dadurch gekennzeichnet, dass** die zweite Sitzfläche (8) aus einer ebenen Fläche besteht.

5. Vorrichtung nach einem der Ansprüche 1 bis 4, **dadurch gekennzeichnet, dass** die zweite Sitzfläche (8) konkav ausgeformt ist.

6. Vorrichtung nach einem der Ansprüche 2 bis 5, **dadurch gekennzeichnet, dass** das Kopfteil (12) um eine Horizontalachse nach vorne schwenkbar gelagert ist.

7. Vorrichtung nach einem der Ansprüche 2 bis 6, **dadurch gekennzeichnet, dass** die zweite Sitzfläche (8) auf der der normalerweise dem Kopf des Fahrzeugführers abgewandten Seite des Kopfteils (12) und/oder auf der Oberseite des Kopfteils (12) angeordnet ist.

8. Vorrichtung nach einem der Ansprüche 1 bis 7, **dadurch gekennzeichnet, dass** die erste Sitzfläche (2) höhenverstellbar ist.

9. Vorrichtung nach einem der Ansprüche 2 bis 8, **dadurch gekennzeichnet, dass** das Kopfteil (12) höhenverstellbar und als Kopfstütze verwendbar ist.

10. Vorrichtung nach einem der Ansprüche 1 bis 9, **dadurch gekennzeichnet, dass** für die Sitzposition des Fahrzeugführers eine Fußbank (14) an dem Sitz (1) angeordnet ist, derart dass die erste Sitzfläche (2) auf einer Höhe angeordnet werden kann, bei der sich der Oberkörper eines Fahrzeugführers im Sitzen und im Stehen in einer in wesentlichen gleichen Höhenposition befindet, und dass die Fußbank (14) für die Standposition des Fahrzeugführers entfernbar ist.

11. Vorrichtung nach einem der Ansprüche 1 bis 10, **dadurch gekennzeichnet, dass** die Rückenlehne (4) in der nach vorne verschwenkten Position unter einem Winkel von 20° bis 50°, vorzugsweise 30° bis 40°, zur Horizontalen arretierbar ist.

12. Vorrichtung nach einem der Ansprüche 1 bis 11, **dadurch gekennzeichnet, dass** die Rückenlehne (4) beim Verschwenken nach vorne mit der Fußbank (14) derart gekoppelt ist, dass die Fußbank (14) in der nach vorne verschwenkten Position der Rückenlehne (4) in der entfernten Position ist.

13. Vorrichtung nach einem der Ansprüche 1 bis 12, **dadurch gekennzeichnet, dass** der Sitz (1) insgesamt in der Höhe verstellbar ist.

14. Vorrichtung nach einem der Ansprüche 1 bis 13, **dadurch gekennzeichnet, dass** der Sitz (1) insgesamt quer und/oder auch in, oder entgegen der Fahrtrichtung verschiebbar ist.

15. Baumaschine, insbesondere Straßenfräse, mit einem Sitz für einen Fahrzeugführer nach einem der Ansprüche 1 bis 14.
